# NEW EUROPEAN PATENT SPECIFICATION

(11) **EP 3 236 762 B2**
(45) Date of publication and mention of the opposition decision: **25.11.2026**
(45) Mention of the grant of the patent: 29.12.2021
(21) Application number: 15819836.6
(22) Date of filing: 28.12.2015
(51) Int. Cl.: A23C 9/154, A23C 21/08, A23C 21/10, A23L 29/212, A23L 29/281, A23L 33/19, A23L 9/10, A23L 35/00

(54) **COMPOSITIONS COMPRISING WHEY PROTEIN, NATIVE STARCH AND SUGAR**
ZUSAMMENSETZUNGEN MIT MOLKEPROTEIN, NATIVSTÄRKE UND ZUCKER
COMPOSITIONS COMPRENANT UNE PROTÉINE DE LACTOSÉRUM, DE L'AMIDON NATIF ET DU SUCRE

(30) Priority: 26.12.2014 WO PCT/IB2014/003124; 26.12.2014 WO PCT/IB2014/003125; 26.12.2014 WO PCT/IB2014/003126
(43) Date of publication of application: 01.11.2017
(73) Proprietor: Compagnie Gervais Danone, 75009 Paris (FR)
(72) Inventor: VALENTINI, Céline, 92320 Chatillon (FR); NOBLE, Olivier, 91400 Orsay (FR); BONNAUD, Florian, 91767 Palaiseau Cedex (FR)
(74) Representative: Regimbeau
(86) International application number: PCT/EP2015/081307
(87) International publication number: WO 2016/102711

(56) References cited:
- EP-B1- 2 178 385
- WO-A1-2013/101400
- CN-A- 104 082 521
- CN-A- 104 186 917
- US-A1- 2009 162 509
- US-A1- 2010 196 559
- US-A1- 2014 335 258
- HENI B. WIJAYANTI ET AL: "Stability of Whey Proteins during Thermal Processing: A Review : Thermal stability of whey proteins...", COMPREHENSIVE REVIEWS IN FOOD SCIENCE AND FOOD SAFETY, vol. 13, no. 6, 20 October 2014 (2014-10-20), US, pages 1235 - 1251, XP055552109, ISSN: 1541-4337, DOI: 10.1111/1541-4337.12105
- Yamul D. et al., Viscoelastic properties of whey protein concentrate gels with honey and wheat flour at different ph 2009

## Description

The invention relates to compositions comprising a high amount of whey protein. The compositions further comprise native starch and sugar. Such compositions have a good processability and texture.

The invention is defined by the claims. Any subject-matter falling outside the scope of the claims is provided for information purposes only.

Whey proteins at high concentrations in aqueous media are known to gel upon heat treatments, while this phenomenon does not occur and/or does not cause issues at low concentrations for example at whey protein concentrations as low as 3% by weight, or even at whey protein concentrations of up to 6%. This is particularly the case at neutral pH. The formation of the gel can foul the processing equipments. The higher the whey protein concentration is, the more difficult the processing is. Various documents describe compositions and processes to obtain liquid drinkable products having high amounts of whey proteins, for example by associating various compounds or types of proteins. However there is a need for other solutions, than can allow further increasing the concentration of whey protein while preserving good processability and/or textures.

Document EP2409575 describes compositions comprising whey protein micelles. The document mentions that retrograded starch can be added. However such starches are pre-gelatinized starches that do not postpone gel formation.

Document US2014/0296162 describes acidic compositions comprising high amounts of whey proteins. The document mentions that starches, for example partially hydrolyzed starches, with a dextrose equivalent of 6 to 20, can be added as thickeners. There is a need for other compositions and processes of making the same with postponed gel formation.

Document WO01/01789 describes compositions comprising a source of whey protein, and a source of carbohydrate. Modified starches are used as carbohydrate source in acidic compositions. There is a need for other compositions and processes of making the same with postponed gel formation.

Documents CN104082521 and CN104186917 disclose modified whey protein gels comprising native starch. In "Stability of Whey Proteins during Thermal Processing: A Review", by Wijayanti H.B. et al., it is disclosed that sucrose has stabilizing behaviour on heated whey proteins by inhibiting the aggregation phase.

The invention addresses at least one of the problems and/or needs mentioned above with an aqueous composition comprising:
- water,
- at least 8.0% by weight of whey protein,
- 0.1% to 1.0% by weight of non-pregelatinized native starch,
- 5.0% to 15.0% by weight of sugar,
wherein the pH is of from 5.0 to 9.0.

The invention also relates to products comprising a container and the composition of the invention, in the container.

### Definitions

In the present application a shelf life refers to a storage period, at shelf temperature such as at ambient or at chilled temperature, of at least 7 days, preferably at least 14 days, preferably at least 30 days, after a final preparation step. The shelf life can be of up to 40 or 50 days for products to be stored at chilled temperature. The shelf life can be of several months, for example up to 3 or 6 months or even more for products to be stored at ambient temperature.

In the present application a chilled temperature refers to a temperature of from 2°C to 10°C, preferably from 4°C to 10°C, for example to a temperature of a refrigerator.

In the present application a room temperature or ambient temperature refers to a temperature of from 15°C to 35°C, preferably from 20°C to 25°C. A room temperature is typically used herein for a temperature at a production facility. An ambient temperature is typically used herein for a temperature after production, for example on shelves.

In the present specification, unless otherwise provided, the viscosity refers to the viscosity as measured, preferably after 10 s at a shear rate, preferably with a rheometer with 2 co-axial cylinders, for example with a Mettler^{®} RM 180 or 200, at an indicated temperature and shear. The temperature is typically 10°C or 30°C. The shear rate is typically 64 s⁻¹ or 1290 s⁻¹. If the temperature is not mentioned the temperature is to be 10°C. If the shear is not mentioned the shear is to be 64 s⁻¹.

In the present application the gel strength refers to the force (in grams) measured by a penetrometry texture analyser, for example, with a TA.XT2 texture analyzer, with the following settings:
- mobile: a cylinder Probe 10, 1.3 cm diameter and 35 mm height
- temperature: 10°C
- calibration for mobile: 5 kg
- mobile speed: 0.2 mm/s
- penetration distance: 15 mm
- sensibility of detection: 0.5 g.

In the present specification a "viscous" composition refers to a composition that is not liquid or pourable. Preferably a viscous composition meets the following criteria: after 1 minute, at a room temperature, preferably at 20°C, a maximum of 10% by weight of the composition would flow out of a container with an opening, upon positioning the container vertically, such that the opening is at the lowest altitude. Viscous compositions encompass compositions with a gel texture. Preferably, a viscous composition has a viscosity of from 500 mPa.s to 50000 mPa.s, preferably from 1000 mPa.s to 10000 mPa.s, preferably from 1500 mPa.s to 5000 mPa.s, at 10°C at 64 s⁻¹ or 10°C at 1290 s⁻¹. Preferably a viscous composition has strength of at least 30 g, preferably at least 500 g, preferably at least 1000 g.

In the present invention, unless otherwise specified, the percentages are percentages by weight.

### Product and Composition

The composition of the invention is a food composition. The composition is typically to be provided in a product comprising a container and the composition. The product is a food product comprising the composition to be administered orally, and a container wherein the composition is contained. In other words the container is the packaging of the composition. The product is typically a sealed product: the container comprising the product is typically sealed before a first use. Upon a first use, the consumer typically provides an opening to the container with altering the container, for example by tearing or cutting a flexible part or by breaking a temper evidence on the cap.

The volume of composition can typically correspond to 70-100%, preferably 80-100%, of the maximum volume of the container.

The composition or product can be stored at a chilled temperature or at an ambient temperature.

### Container

The container can be any food container, such as a cup, a bottle or a flexible container. The container is the packaging of the composition.

In one embodiment the container is a flexible container. By flexible container it is meant that the container comprises at least a part that is made of a flexible material, such as a monolayer or multilayer laminate, that can be substantially deformed by manipulating. The laminate can have for example a thickness of less than 0.5 mm, preferably less than 0.3 mm, for example less than 0.1 mm. The laminate typically exhibits barrier properties suitable for packaging food compositions. Examples of materials that can be used in the laminate include papers, metal foils or coatings, and plastic film or coatings.

The packaging can be for example a pouch. Flexible pouches are known by the one skilled in the art of packaging. They typically include a plied or folded part and a sealed part, typically a thermosealed part. Typically a laminate is handled and partially sealed to provide a filling opening, then the composition is filled via the filling opening, and then the pouch is closed by further sealing and/or by providing a pre-formed closure, such as a cap.

In a preferred embodiment the container is a pouch container known as doypack. In a preferred embodiment the container has an opening, preferably having a size of from 1 mm to 15 mm, preferably from 5 mm to 15 mm, preferably closed by a non-flexible cap. It is meant that the container is such that at least after a first use opening, the container is provided with the opening, said opening allowing the composition to be dispensed out of the container. The opening is preferably closed, for example with a tearable or cuttable portion or with a cap. In one embodiment, for example with caps, the opening can be closed again after first use. In one embodiment the opening cannot be closed again, without further means, after first use.

The container can be for example a container having a maximum volume of 50 ml (or 50 g) to 500 ml (or 500 g), for example from 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g), or 250 ml (or 250 g) to 300 ml (or 300 g), or 300 ml (or 300 g) to 500 ml (or 500 g).

The composition in the container has preferably a gel strength of from 1000 g to 8000 g, preferably from 1000 g to 5000 g, for example from 1000 g to 2800 g. Such a texture can allow the composition to be well dispensed from the container via the opening or with a spoon, while being appreciated in mouth.

### Composition

The composition is typically an aqueous composition, comprising water and ingredients. It is mentioned that a part of the water can come from ingredients used to prepare the composition. The composition can for example have a dry matter content of up to 60% by weight, preferably from 8% to 50% by weight. The composition can have a water content of from 92% to 50% by weight. The water can typically be the matrix or carrier of the composition, wherein the ingredients are introduced. Other matrix or carriers, can for example include milk-based liquids or fruit juices, either obtained directly from milk or fruits, or reconstituted by mixing powder(s) or concentrate(s) therefrom with water. In one embodiment the matrix or carrier is different from a milk-based liquid or from a fruit juice. In one embodiment the composition is different from a milk-based composition or from a fruit juice based composition. The water has preferably a low amount of minerals. The water is preferably demineralized water or osmosed water.

The composition has preferably an energy density of less than 200 kcal per 100 g. It is believed that compositions having an energy density higher than 200 kcal per 100g would not be adapted to regular consumption by consumers that do not present food-related pathologies or other specific needs. Moreover such compositions would be loaded with carbohydrates and/or fats that can modify the rheology. The energy density is preferably lower than 150 kcal per 100 g, preferably lower than 120 kcal per 100 g, preferably lower than 110 kcal per 100 g. Fat preferably represent at most 25% of the energy, preferably at most 20%, for example from 5% to 20%. Carbohydrates preferably represent at most 65% of the energy, preferably at most 60%, for example from 40% to 60%. Protein preferably represents at least 20% of the energy, preferably at least 30%, for example from 30% to 50%.

The composition has a pH of from 5.0 to 9.0, preferably from 6.0 to 8.0, for example from 6.0 to 6.5, or from 6.5 to 7.0, or from 7.0 to 7.5, or from 7.5 to 8.0. The pH can be for example of from 6.5 to 7.5, for example from 6.8 to 7.2. It is believed that in this range the whey protein is typically in a form different from a colloidal suspension or a coacervate dispersion. In the composition the whey protein is typically at least partly solubilized in the aqueous medium, optionally in the form of at least partially solubilized complex.

The composition can comprise pH adjustment agents and/or buffers. For example the composition can comprise citric acid. The composition can comprise a calcium complexing agent, for example a sequestrant. Examples include phosphates, preferably a sodium phosphate, such as trisodium phosphate.

The composition preferably has an ionic strength of higher than 100 mM, preferably higher than 150 mM, preferably higher than 200 mM. Higher ionic strengths are believed to help in providing viscous and/or gel textures.

The composition comprises sugar. Sugar helps in providing organoleptic properties appreciated by consumers. Additional sugar helps in the process of making the composition, by preventing or postponing fouling or gelling in the equipment. The composition comprises from 5.0% to 15.0% by weight of sugar, for example from 5.0% to 8.0%, or from 8.0% to 11.0%, or from 11.0% to 15.0%. The composition can comprise at most 8.0% by weight of sugar.

The composition can comprise at least one polysaccharide different from the non-pregelatinized native starch, herein referred to as "further polysaccharide". The amount of further polysaccharide can be for example of from 0.1% to 5.0% by weight, preferably from 0.5% to 2.0%. Examples of further polysaccharides that can be present in the composition include starches different from non-pregelatinized native starch, galactomannans, such as guar gums and locust bean gums, carrageenans, xanthane gum, maltodextrines or pectins. The further polysaccharide can have suspending and/or viscosity enhancing and/or stability enhancing properties. Such further polysaccharides for example include other starches such as modified starches, for example tapioca chemically modified starches, such as National Frigex^{™} NSC marketed by Ingredion^{®}. Other further polysaccharides include for example galactomannans, such as guar gums and locust bean gums, carrageenans, xanthane gum, maltodextrines or pectins.

The composition preferably comprises some fat, preferably in a low amount. If present the amount of fat can be of at least 0.1% by weight, preferably at least 0.5%. The composition can comprise for example from 0.1% to 5.0% by weight of fat, preferably from 0.5% to 2.5%. The fat or a part thereof can be an oil, preferably a vegetal or animal oil such as fish oil. The oil can be present for example in an amount of from 0.1% to 5.0% by weight, preferably from 0.5% to 2.5%.

The composition can comprise some nutrients, different from the proteins, sugar and fat, preferably nutrients known as participating in a muscle-relating function. Examples include vitamins, such as vitamin C, vitamin B such as vitamin B6 and vitamin B9.

The composition can comprise organoleptic agents. Such agents are known by the one skilled in the art and are typically used to provide or adjust the taste or mouthfeel of the composition. The organoleptic modifiers can be for example:
- nuts pastes or extracts such as almond paste, hazelnuts compounds, chocolate, etc.
- cereals,
- fruits or fruits extracts,
- sweeteners different from sugar.

In one embodiment at least a part of the organoleptic modifiers are provided via an organoleptic preparation, often referred to as fruit preparation. Such preparations are known by the one skilled in the art, and are further detailed below.

The composition has preferably a gel strength of lower than 8000 g, preferably of lower than 5000 g. The gel strength can be for example of from 1000 g to 8000 g, preferably from 1000 g to 5000 g, for example from 1000 g to 2800 g. Such a texture allows the composition to be well dispensed from the container via the opening or with a spoon, while being appreciated in mouth.

The composition preferably has a viscosity at 10°C at 64 s⁻¹ of lower than 1500 mPa.s, preferably lower than 1000 mPa.s.

The composition or product can be stored at a chilled temperature or at an ambient temperature.

### Whey Protein

The composition comprises at least 8.0% by weight, preferably at least 8.5%, preferably at least 9.0%, preferably at least 9.5%, preferably at least 10.0%, preferably at least 10.5%, preferably at least 11.0%, preferable at least 11.5%, preferably at least 12.0%, preferably at least 12.5%, preferably at least 13.0%, preferably at least 13.5%, preferably at least 14.0%, of whey protein. The amount of whey protein can be for example of lower than 20.0%, for example from 10.0% to 20.0%. Preferably the composition is an aqueous composition comprising from 10.0% to 17.5% by weight of whey protein, for example from 10.5% to 17.5%. The whey protein is typically provided in the composition from a whey protein source or ingredient.

Whey proteins are known by the one skilled in the art, and are commercially available. Whey is typically manufactured by coagulating milk, and is typically obtained as a by-product of cheese or fermented milk production. Whey can be sweet whey or acid whey, from which the whey protein are concentrated. The concentration of protein in whey is typically increased by removing lipids and other non-protein materials. For example spray drying after membrane filtration separates the proteins from whey. Whey protein is the collection of globular proteins isolated from whey. Whey proteins are typically comprised of a mixture of α-lactalbumin, β-lactoglobulin, and optionally serum albumin. The amounts of these compounds in the whey protein can vary. Typical proportions are for example the following: 60-70 wt% α-lactalbumin, 20-30 wt% β-lactoglobulin, 0-10 wt% serum albumin. It is mentioned that the whey proteins of the invention are typically non-hydrolyzed whey proteins. Whey proteins that can be used in the invention include Whey Protein Concentrates (WPC) and, preferably Whey Protein Isolates (WPI).

In certain embodiments the protein present in the whey protein source, for example a whey protein concentrate (WPC), a whey protein isolate (WPI), or a blend of whey protein sources including a blend of WPCs or WPIs or both, comprises, consists essentially of, or consists of non-hydrolysed whey protein. In one embodiment, the protein present in the WPC or WPI comprises at least 65% non-hydrolysed protein, at least 70% non-hydrolysed protein, at least 75% non-hydrolysed protein, at least 80% non-hydrolysed protein, at least 85% non-hydrolysed protein, at least 90% non-hydrolysed protein, at least 95% non-hydrolysed protein, or at least 99% non-hydrolysed protein. In one embodiment, the WPC or WPI is substantially free of hydrolysed protein.

In one embodiment, the whey protein is provided by an ingredient that comprises a protein content of 35% to 95% by weight of the dry matter of the ingredient.

A whey protein concentrate (WPC) is a fraction of whey from which lactose has been at least partially removed to increase the protein content to at least 20 wt%. Preferably the WPC has at least 40 wt%, more preferably at least 55 wt%, even more preferably at least 65 wt% and most preferably at least 75 wt% of the total solids as whey protein. Preferably, the relative proportions of the various whey proteins are substantially equivalent to those of the whey from which the WPC is obtained. Preferably, the WPC is an evaporated whey protein retentate. WPCs are generally prepared by ultrafiltration and/or diafiltration of whey. In one embodiment the whey protein ingredient is an utrafiltrated WPC. A whey protein isolate (WPI) is a WPC having at least 90% of the total solids as whey protein. Preferably, the protein composition in the ingredient is substantially that of the whey from which it is obtained.

The whey protein ingredient, preferably WPI, might comprise an amount of minerals, including for example sodium and/or calcium and other minerals. Preferably the amount of minerals in the whey protein is of less than 3250 mg per 100 g, preferably preferably less than 2000 mg per 100g. Preferably the amount of calcium in the whey protein is of less than 300 mg per 100 g, preferably less than 200 mg per 100g, preferably less than 100 mg per 100 g. Preferably the amount of sodium in the whey protein is of less than 500 mg per 100 g, preferably less than 300 mg per 100 g, preferably less than 200 mg per 100 g. Preferably the amount of minerals in the whey protein is of less than 3250 mg per 100 g, and the amount of calcium in the whey protein is of less than 300 mg per 100 g, and the amount of sodium in the whey protein is of less than 500 mg per 100 g. For example the amount of minerals in the whey protein can be of less than 2000 mg per 100 g, and the amount of calcium in the whey protein can be of less than 200 mg per 100 g, and the amount of sodium in the whey protein can be of less than 300 mg per 100 g.

Whey proteins in a native state are in a globular form. Upon processing, for example upon heating, whey proteins can be denaturated, being thus at least partially in a form that does not correspond to the globular native form, for example in a non-globular unfold form. This phenomenon is known by the one skilled in the art. The whey protein ingredient is typically an ingredient wherein the whey protein is not or is slightly in a denaturated state. Preferably at most 45% of the whey protein in the ingredient is in a denaturated state, preferably at most 35%. In one embodiment 5-30% of the whey protein in the ingredient is in a denaturated state. It is mentioned that, in the composition after having undergone a preparation process, some of the whey protein can be in a denaturated state, preferably with from more than 45% to 90% being in denaturated state, for example from 60% to 80%.

In the particular embodiment the whey protein has at least one of the following features:
- caseinomacropetide (CMP) amount, if present, of lower than 15%,
- divalent cations amount of lower than 0.5%, and
- denaturation rate of lower than 5%, preferably lower than 2%.

It is mentioned that the whey proteins, along the preparation process of the composition, from the whey protein source or ingredient to the intermediate preparations and to the final composition, typically do not undergo a drying step and/or a concentration step. In this aspect, the preparation, the composition, and the process to make the same are typically different from compositions and processes to make whey protein ingredients to be added in a formulation.

The composition can comprise some other proteins different from whey proteins, for example a casein compound such as a non-micellar casein compound such as sodium caseinate, vegetal proteins such as soy protein or pea protein. If present other proteins represent at most 25% by weight, preferably at most 20%, preferably at most 15%, preferably at most 10%, preferably at most 5%, preferably at most 1%, of the total proteins.

It is mentioned that the composition can comprise a leucine component, as part of the whey protein. The composition can comprise some added free leucine, preferably L-leucine, added to further increase the leucine content. The total leucine can be thus adjusted, if needed, to be for example of 1% to 2% by weight of the composition, of which from 10% to 50% by weight or number is preferably free-leucine.

### Native Starch

The composition of the invention comprises a non-pregelatinized native starch. Non-pregelatinized starch refers to a starch that has not undergone modifications to render it soluble in cold water, such as swelling and/or dissolution. Non pre-gelatinized native starches typically have macromolecular amylopectin and optionally amylose in a similar arrangement that in native state, without significant rearrangement for example of the microcrystalline structure and/or inclusion of water molecules. It is mentioned that non-pregelatinized starches exclude gelatinized starches. The native starch is not chemically modified. It is also referred to as an unmodified starch. Chemical modification of starch is any way usually performed with some preliminary swelling and or dissolution corresponding to a pregelatinization and/or to gelatinization. The non pregelatinized native starch can be a native maize starch or waxy maize starch, for example with an amylose content of from 0% to 50%, preferably from 0% to 30%, for example from 0% to 5% or from 5% to 10%, or from 10% to 15%, or from 15% to 20%, or from 20% to 25% or from 25% to 30%. These contents are typically by weight.

It is mentioned that pregelatinization processes as well as both pregelatinized starches and non-pregelatinized starches are known by the one skilled in the art and available on the market. Examples of pre-gelatinized starches or pre-gelatinized starches include N4300 and N2300 marketed by Ingredion^{®}. Examples of non-pregelatinized native starch include Amioca powder TF, marketed by Ingredion^{®}.

The amount of non-pregelatinized native starch is from 0.10% to 1.00% by weight, for example from 0.10% to 0.50% or from 0.50% to 0.99%.

It has been found that non-pregelatinized native starch helps in controlling gelling of the composition, especially upon heat-treating, for example in preventing or postponing gelling or fouling in the equipment, and/or by moderating the gel strength and/or viscosity of the composition.

### Process for making the Product

The product can be prepared by any appropriate process. Typically the product is prepared by a process comprising the following steps:
Step A) preparing the composition, and
Step B) filling the composition in the container.

Preferably the composition, during its preparation, in processing equipments, is in a liquid state. The viscosity can typically increase, up to gel state, after preparation, during a storage in an appropriate tank before filling, and/or during storage of the product for example at a chilled temperature or at ambient temperature. Thus the process can comprise a step of: Step C) storing the composition in the container to allow a gel formation. In one embodiment the process comprises a maturation step between step A) and step B). It is mentioned that the maturation step can be the last step of step A).

In one embodiment:
- step A) is carried out during from 1 minute to 5 hours, preferably from 25 min to 4 hours, from 30 minutes to 4 hours,
- an optional maturation period of up to 6 hours is allowed between step A) and step B).

The temperature during the maturation period can be of from 4°C to 45°C. In one embodiment the temperature decreases from a temperature at the end of step A), for example above 45°C, to a final temperature being room temperature, or a chilled temperature. In one embodiment the maturation period is performed at stable temperature, for example at a room temperature or at a chilled temperature. The maturation can be performed in a tank.

### Process for making the composition

The composition can be prepared, for example as Step A) above, according to any appropriate process. In this section the process refers to the process of making the composition.

The process of making the composition can comprise the steps of:
a) preparing an aqueous mixture comprising the water, and the non-pregelatinized native starch, and
b) heat-treating at a temperature of at least 70°C, preferably at least 75°C, preferably at least 85°C.

Step a) can comprise a step adding the whey protein, then adding the non-pregelatinized native starch. Step b) can be performed for example by Direct Steam Injection. The process can comprise a homogenization step c), preferably performed after heat treatment step b). The process can comprise a cooling step after the heat treatment step b) or an optional homogenization step c).

The process of making the composition typically involves a heat-treatment, such as pasteurization or sterilization to prevent any contamination. For neutral products having a pH of from 5.0 to 9.0, preferably 6.0 to 8.0, a sterilization is preferred. For neutral products to be stored at ambient temperature a sterilization is preferred. Given the high concentration of whey proteins, and the sensitivity to heat of these, that can result in a gel formation in the equipments and/or to fouling the equipments, it is preferred that the heat treatment be performed very quickly, typically with a Direct Steam Injection (DSI) technology. Thus, the preparation process can involve a Direct Steam Injection step.

It is found practical to prepare at least a composition comprising the whey, with a heat treatment, preferably involving a Direct Steam Injection step, and optionally mix one or several preparations. Thus the process can comprise the following steps:
Step 1) preparing a Mass 1 composition comprising the whey protein and preferably all or a part of the non-pregelatinized native starch, and
Step 2) adding at least one aqueous preparation, preferably comprising at least one polysaccharide, preferably a remaining part of the non-pregelatinized native starch or a further polysaccharide.

Mass 1 is a composition comprising water, the protein(s) and the non-pregelatinized native starch. At least one aqueous preparation can be added to Mass 1. The at least one added aqueous preparation that is added can comprise an amount of non-pregelatinized native starch and/or at least one further polysaccharide. The addition of such a polysaccharide, at such a later stage can provide a modified texture and/or control thereof. An at least one aqueous preparation comprising at least one polysaccharide can thus be also referred to as a texture control preparation.

The at least one aqueous preparation is typically added to adjust the rheology and/or the taste. In one embodiment the ratio by weight between Mass 1 and the at least one aqueous preparation is of at least 50/50, preferably between 60/40 to 90/10. If no preparation is added Mass 1 is the composition.

In one embodiment the at least one aqueous preparation comprises a Mass 2 composition preferably comprising an at least one polysaccharide, and optionally a Mass 3 fruit preparation.

In one embodiment the at least one aqueous preparation comprises a Mass 2 composition comprising an at least one further polysaccharide, and at least a Mass 3 fruit preparation.

In one embodiment Mass 3 comprises at least one polysaccharide, preferably a further polysaccharide.

In one embodiment the at least one aqueous preparation optionally comprising the at least one further polysaccharide, preferably a Mass 2, comprises sugar. In one embodiment Mass 1 comprises sugar. In one embodiment, Mass 1 and the at least one aqueous preparation optionally comprising the at least one polysaccharide, preferably a Mass 2, comprise sugar.

In a preferred embodiment, the polysaccharide of the at least one aqueous preparation is a native starch.

The addition to Mass 1 of the at least one aqueous preparation, typically a Mass 2 and/or a Mass 3, can be performed by any appropriate means. For example one can mix the Mass 1 and Mass 2, and then optionally mix a Mass 3. Such mixing operations are known by the one skilled in the art.

Mass 1 typically comprises the proteins of the composition, preferably all the protein of the composition. Mass 1 is typically an aqueous composition. The water can typically be the matrix or carrier of Mass 1, wherein the ingredients are introduced. Other possible matrix or carriers are those described above for the composition. Examples include milk-based liquids, either obtained directly from milk, or reconstituted by mixing powder(s) or concentrate(s) with water. The water has preferably a low amount of mineral. The water is preferably demineralized water or osmosed water.

The concentrations of ingredients in Mass 1 can be adjusted to fit with the concentrations provided above for the composition, depending on the dilution that can be provided by adding the at least one aqueous preparation, if added. As to adjustment of the concentrations, particularly the concentration in proteins, preferably whey proteins, the concentration can be for example increased by at least 10%. Thus in Mass 1, the concentration in whey proteins and optionally non-pregelatinized native starch, can be for example of at least 8.0% by weight, preferably at least 8.5%, preferably at least 8.8%, preferably at least 9.35%, preferably at least 9.5%, preferably at least 10.0%, preferably at least 10.45%, preferably at least 11.0%.

Preferably Mass 1 is an aqueous composition comprising from 10.0% to 17.5% by weight of whey protein, or from 11.0% to 19.25% by weight of whey protein.
Mass 1 can comprise some of the sugar of the composition, typically in an amount such that the weight ratio between whey proteins and sugar is of from 0.5 to 1.0, or 1.0 to 1.7, preferably 1.22 to 1.55. Mass 1 can comprise the leucine and/or at least a part of the organoleptic modifiers. Mass 1 can comprise some of the polysaccharide, typically in an amount of from 0.1% to 5.0% by weight, preferably from 0.5% to 2.0%, preferably in an amount of at least 10% more than the amounts mentioned above for the composition, if Mass 1 is further mixed with an aqueous preparation.

The pH of Mass 1 is preferably as mentioned above.

A process of making the composition, for example a Mass 1 composition, comprises the steps of preparing an aqueous mixture comprising the whey protein and the non-micellar casein compound and heat-treating. The following steps can be implemented:
Step a') Powdering,
Step b') Optionally Oil injection,
Step c') Homogenization,
Step d') Pre-Heating,
Step e') Direct Steam Injection (DSI),
Step f') Flash cooling,
Step g') Further cooling and optionally Storing.

It is mentioned that step a') and step g') can be batch steps, while steps b') to f') are typically continuous steps.

Step a') is a powdering step. In this step powder ingredient(s), typically the whey protein and the non-pregelatinized native starch, are introduced in a liquid matrix or carrier, such as those described above, typically water. Such a step and equipments therefore, for example triblenders, are quite conventional and known by the one skilled in the art. In a preferred embodiment the ingredients are handled and processed with avoiding introduction of gaz. The process can otherwise comprise a degasing step, preferably at some stage before the DSI step, preferably before the pre-heating step, preferably before the homogenization step. Step a') can be carried out at a room temperature.

It is mentioned that the mixture obtained at step a') can be subjected to a pre-heating step to a temperature of from higher than room temperature to about 75°C after step a').

If the composition comprises some oil, then the oil can be typically introduced by injection at a step b'), for example by an in-line injection.

Step c') is a homogenization step. Such steps are known by the one skilled in the art. The homogenization can be for example performed in conventional homogenizers at a pressure of from 20 bars to 300 bars (20 to 300 10⁵ Pa), preferably from 50 bars to 250 bars (50 to 250 10⁵ Pa), for example at 50 bars (50 10⁵ Pa). It is preferred that the homogenization be performed before the DSI step. It has been found that subjecting Mass 1 to high shears, such as shear provided by homogenization can lead to increasing gelling of the proteins in the equipments and/or to accelerating fouling of the equipments. The same can apply to step c) mentioned above.

Step d') is a pre-heating step, before the major heat treatment by DSI. It is mentioned that if a pre-heating step has been performed before oil injection and/or homogenization, then the pre-heating step d') is performed such that the temperature is further increased. It is preferred that the pre-heating be performed at a quite mild temperature, for example at a temperature of from 50°C to 75°C, preferably from 55°C to 70°C, preferably from 60°C to 65°C. Such mild temperatures are believed to provide enough temperature increase before the DSI, while preventing or postponing gelling of the proteins and fouling of the equipments at later stage, for example at DSI step or after.

Step e') is a Direct Steam Injection (DSI) step. Such steps and appropriate equipments are known. These allow subjecting compositions to high temperatures during a short period, and thus allow sterilizing products that are heat sensitive. Preferably the DSI is performed at a temperature of from 140°C to 150°C, preferably at a temperature of 145°C. Preferably the treatment time is of from 1s to 10s, preferably from 2s to 5s. The pressure can be for example of 1 bar (10⁵ Pa). The same applies to step b) mentioned above.

At step f') a flash cooling is performed, to decrease efficiently the temperature. Such a step is typically performed in a flash cooler, and involves introducing the composition in a vacuum chamber. The temperature after the flash cooling step is preferably of from 50°C to 65°C, preferably from 55°C to 63°C.

At step g') a further cooling is performed, to reach a desired storage and further processing temperature, for example of from 4°C to 45°C. In one embodiment the temperature decreases from a temperature at the end of step A), for example above 45°C, to a final temperature being a room temperature, or a chilled temperature. It is noted that step g') can be a maturation step as mentioned above.

After step g') the composition, for example a Mass 1, is typically a liquid, with a viscosity of less than 1000 mPa.s at 1290 s⁻¹ at 30°C, preferably at 10°C, preferably of less than 500 mPa.s at 1290 s⁻¹ at 30°C, preferably at 10°C, preferably of less than 100 mPa.s at 1290 s⁻¹ at 30°C, preferably at 10°C or of less than 1500 mPa.s, preferably less than 1000 mPa.s at 10°C at 64 s⁻¹.

The composition, for example a Mass 1, can be then further processed. In one embodiment Mass 1 is temporary stored, before being introduced in the container or mixed with other preparations. For example it can be transferred to a storage tank and stored, for example at a temperature of from 2°C to 35°C, for example at a room temperature or at a chilled temperature. The storage time is preferably of at most 24h, preferably at most 6h, for example up to 3 hours.

Steps b') to f') that are typically continuous steps, especially step e'), can run for a certain period of time. Upon running the equipments might progressively generate fouling that can reach a level at which stopping and cleaning would be required. The above-described process of making Mass 1 is found efficient, with allowing running periods of at least 25 min, preferably at least 30 minutes or even more, for example at least 1 minute, preferably at least 30 minutes, preferably at least 1 hour, preferably at least 3 hours, typically up to 6 hours, for example between 25 minutes and 4 hours, or between 30 minutes and 4 hours.

Mass 2 can be for example an aqueous composition comprising water and ingredients, for example the further polysaccharide and optionally sugar. Mass 2 is also referred to as a syrup. Mass 2 can comprise some further ingredients such as organoleptic modifiers, or some nutrients. It is mentioned that a part of the water in Mass 2 can come from ingredients used to prepare the composition. The composition can for example have a dry matter content of from 0.5% by weight to 50% by weight, preferably from 1% to 20% by weight. Mass 2 can have a water content of from 0.5% to 99.5% by weight, preferably from 1% to 80% by weight. Mass 2 can have a water content of from 50% to 99.5% by weight, preferably from 80% to 99% by weight. The water can typically be the matrix or carrier of Mass 2, wherein the ingredients are introduced. Other possible matrix or carriers are those described above for the composition. Examples include milk-based liquids, either obtained directly from milk, or reconstituted by mixing powder(s) or concentrate(s) with water. In one embodiment the matrix or carrier is a milk-based liquid. In one embodiment Mass 2 is a milk-based composition. The water has preferably a low amount of mineral. The water is preferably demineralized water or osmosed water.

Mass 2 typically comprises at least one further polysaccharide, preferably in an amount of from 0.5% to 3.5% by weight. The polysaccharide preferably can comprise a native starch, also referred to as an unmodified starch, for example a native maize starch or waxy maize starch, for example with an amylose content of from 1% to 50%, preferably from 20% to 30%. Appropriate ingredients include starches referred to as waxy maize starch and/or native starch and/or mixtures thereof, in particular referred to as waxy maize starch and/or native maize starch and/or mixtures thereof. An appropriate ingredient is for example Amioca powder TF, marketed by Ingredion^{®}. The polysaccharide might comprise other starches such as modified starches, for example chemically and/or physically modified starches, for example modified with cross-linkages. Such other starches include for example pre-gelatinized starches.

In one embodiment Mass 2 comprises at least one native starch, and at least one further polysaccharide. The further polysaccharide can have suspending and/or viscosity enhancing and/or stability enhancing properties. Such further polysaccharides for example include other starches such as modified starches, for example tapioca chemically modified starches, such as National Frigex^{™} NSC marketed by Ingredion^{®}. Other further polysaccharides include for example galactomannans, such as guar gums and locust bean gums, carrageenans, xanthane gum, maltodextrines or pectins.

Mass 2 can comprise sugar, preferably in an amount of from 1% to 20% by weight, for example from 5% to 10% by weight.

Mass 2 can be prepared by any appropriate process. Preferred processes involve a heat treatment step to ensure pasteurization and/or sterilization.

If the composition comprises some nutrients, these are preferably added in the at least one aqueous preparation such as Mass 2 or Mass 3.

Mass 3 is typically a fruit preparation. These are intermediate preparations comprising fruit and/or cereals, typically used for imparting a fruit and/or cereal taste and/or mouthfeel to food products such as dairy products.

The fruit preparation typically comprises fruits. Herein fruits refer to any fruit form, including for example full fruits, pieces, purees, concentrates, juices, etc.

Typically a fruit preparation can be added in an amount of 5-35% by weight with reference to the total amount of composition.

The fruit preparation typically comprises a stabilizing system, having at least one stabilizer. The stabilizing system can comprise at least two stabilizers. Such stabilizers are known by the one skilled in the art. They typically help in avoiding phase separation of solids, for examples of fruits or fruits extracts and/or in avoiding syneresis. They typically provide some viscosity to the composition, for example a viscosity (Bostwick viscosity at 20°C) of from 1 to 20 cm/min, preferably of from 4 to 12 cm/min.

The stabilizing system or the stabilizer can for example be a starch, a pectin, a guar, a xanthan, a carrageenan, a locust bean gum, or a mixture thereof. The amount of stabilizing system is typically of from 0.5 to 5% by weight.

The fruit preparation can typically comprise organoleptic modifiers. Such ingredients are known by the one skilled in the art.

The organoleptic modifiers can be for example sweetening agents different from sugar, coloring agents, cereals and/or cereal extracts.

Examples of sweetening agents are ingredients referred to as High Intensity Sweeteners, such as sucralose, acesulfamK, aspartam, saccharine, rebaudioside A or other steviosides or stevia extracts.

Examples of fruits include for example strawberry, peach, apricot, mango, apple, pear, raspberry, blueberry, blackberry, passion, cherry, and mixtures or associations thereof, such as peach-passion.

The fruits can be for example provided as:
- frozen fruit cubes, for example 10 mm fruit cubes, for example Individual Quick Frozen fruit cubes, for example strawberry, peach, apricot, mango, apple, pear fruit cubes or mixtures thereof,
- Aseptic fruit cubes, for example 10 mm fruit cubes, for example strawberry, peach, apricot, mango, apple or pear fruit cubes or mixtures thereof,
- fruit purees, for example fruit purees concentrated from 2 to 5 times, preferably 3 times, for example aseptic fruit purees, for example strawberry, peach, apricot, mango, raspberry, blueberry or apple fruit purees or mixtures thereof,
- single aseptic fruit purees, for example strawberry, raspberry, peach, apricot, blueberry or apple single aseptic fruit purees or mixture thereof,
- frozen whole fruits, for example Individual Quick Frozen whole fruits, for example blueberry, raspberry or blackberry frozen whole fruits, or mixtures thereof,
- mixtures thereof.

The ingredients and/or components of fruit preparation and the amounts thereof are typically such that the composition has a brix degree of from 1 to 65 brix, for example from 1 to 10 brix, or from 10 to 15 brix, or from 15 to 20 brix, or from 20 to 25 brix, or from 25 to 30 brix, or from 30 to 35 brix, or from 35 to 40 brix, or from 40 to 45 brix, or from 45 to 50 brix, or from 50 to 55 brix, or from 55 to 60 brix, or from 60 to 65 brix.

The fruit preparation can for example comprise fruit in an amount of from 30% to 80% by weight, for example from 50 to 70% by weight.

The fruit preparation can comprise water. It is mentioned that a part of the water can come from ingredients used to prepare the fruit preparation, for example from fruits or fruit extracts or from a phosphoric acid solution.

The fruit preparation can comprise pH modification agents such as citric acid. The fruit preparation can have a pH of from 2.5 to 5, preferably of from 2.8 to 4.2.

### Method of use

The composition of the invention or the composition obtained by the above process is typically to be orally ingested. It presents a texture and/or mouthfeel appreciated by consumer.

Upon use the composition is dispensed out of a container. To do so the user can use a spoon if the container is not a flexible container such as a cup, or, if the container is a flexible container, typically apply some pressure on the flexible part of the container to force the composition out of an opening. Thus the dispensing can be performed by applying a force on the container, preferably by pressing the container, preferably with a human hand. The opening can have for example a size (length, width or diameter for example) of from 1 mm to 15 mm. This dispensing is typically performed via an opening having a size of from 1 mm to 15 mm. In a preferred embodiment the dispensing is performed in the mouth of a human, for the composition to be orally ingested. It is however not excluded that the composition be dispensed in a cup or on a plate or on a spoon and then be ingested.

When dispensed out of the container, typically via the opening or a spoon, the composition presents a texture and/or mouthfeel appreciated by consumer. It is mentioned that the dispensing through the opening might provide some shear and might slightly change the texture and/or mouthfeel of the composition. Such slightly modified texture and/or mouthfeel are appreciated by consumer.

Further details or advantages of the invention might appear in the following non limitative examples.

### Examples

### Example 1

The compositions of Table 1 (wherein amounts are given as % by weight) are prepared, according to the procedure below. The letter "c" designates a comparative example.

### Procedure

The compositions are prepared in apparatus Thermomix MT31 marketed by Vorwerk, equipped with the anchor agitator and the blades.
1) At room temperature, put water into the bowl
2) Add Almond Paste
3) Mix 30 seconds at speed 2
4) Add and hydrate Acacia Gum, then add whey protein, then add native starch
5) Mix 1 hour at speed 2
6) Increase temperature to 70°C in 10 minutes, and hold temperature with mixing at speed 1.
7) Visually check appearance of the mix and note time at which a gel visually appears.
8) The composition obtained is then cooled to room temperature.

### Evaluations

Time before gel: Time in minutes a gel visually appears.

The results are reported in table 1.

**Table 1**

| **Ingredient** | **Example 1.1c** | **Example 1.2c** | **Example 1.3** | **Example 1.4** | **Example 1.5** | **Example 1.6c** |
|---|---|---|---|---|---|---|
| WPI Lacprodan^{®} 9224, Arla^{®} | 12.2 | 12.2 | 12.2 | 12.2 | 12.2 | 12.2 |
| Trisodium Phosphate | 0.2 | 0.2 | 0.2 | 0.2 | 0.2 | 0.2 |
| Maize Native Starch having about 25% amylose | / | / | 0.75 | 0.75 | / | / |
| Native Starch: Amioca Powder TF, Ingredion^{®} | / | / | / | / | 0.75 | / |
| Pre-gelatinized starch: N4300, Ingredion | / | / | / | / | / | 0.75 |
| Cristal Sugar | 0.0 | 11.0 | 8.0 | 11.0 | 8.0 | 8.0 |
| Almond Past 95%, Fruisec^{®} | 2.2 | 2.2 | 2.2 | 2.2 | 2.2 | 2.2 |
| Water | qs | qs | qs | qs | qs | qs |
| | | | | | | |
| pH | 7.18 | 7.18 | About 7 | About 7 | About 7 | About 7 |
| | | | | | | |
| Time before gel | 15 | 20 | 29 | 27 | 37 | 20 |

This example shows that using non pre-gelatinized native starch surprisingly postpones gel formation upon heating during processing, while other starches do not provide the same effect.

## Claims

1. An aqueous composition comprising:
- water,
- at least 8.0% by weight of whey protein,
- 0.1% to 1.0% by weight of non-pregelatinized native starch, and
- 5.0% to 15.0% by weight of sugar,
wherein the pH is of from 5.0 to 9.0.

2. The composition according to claim 1, wherein the native starch is waxy maize native starch.

3. The composition according to any one of the preceding claims, wherein the native starch has an amylose content of from 0% to 50%, preferably from 0% to 30%.

4. The composition according to any one of the preceding claims, wherein the concentration of whey protein is at least 10.0%, preferably at least 12.0%.

5. The composition according to any one of the preceding claims, wherein the pH is of from 6.5 to 7.5, preferably from 6.8 to 7.2.

6. The composition according to any one of the preceding claims, having a viscosity at 10°C at 64 s⁻¹ of lower than 1500 mPa.s, preferably lower than 1000 mPa.s.

7. The composition according to any one of the preceding claims, having a gel strength of lower than 8000 g, preferably lower than 5000 g.

8. The composition according to any one of the preceding claims, comprising at most 8.0% by weight of sugar.

9. The composition according to any one of the preceding claims, further comprising a calcium complexing agent.

10. The composition according to any one of the preceding claims, wherein the calcium complexing agent is phosphate, preferably trisodium phosphate.

11. The composition according to any one of the preceding claims, wherein the whey protein is a whey protein isolate.

12. A product comprising a container and the composition according to any one of claims 1 to 11, in the container.

## Patentansprüche

1. Wässrige Zusammensetzung, die umfasst:
- Wasser,
- mindestens 8,0 Gew.-% Molkeprotein,
- 0.1% bis 1.0% nicht vorgelatinierte native Stärke, und
- 5,0 bis 15 Gew.-% Zucker,
wobei der pH-Wert von 5,0 bis 9,0 beträgt.

2. Zusammensetzung nach Anspruch 1, wobei die native Stärke native Wachsmaisstärke ist.

3. Zusammensetzung nach einem der vorhergehenden Ansprüche, wobei die native Stärke einen Amylosegehalt von 0% bis 50%, vorzugsweise von 0% bis 30%, aufweist.

4. Zusammensetzung nach einem der vorhergehenden Ansprüche, wobei die Konzentration an Molkeprotein mindestens 10,0%, vorzugsweise mindestens 12,0%, beträgt.

5. Zusammensetzung nach einem der vorhergehenden Ansprüche, wobei der pH-Wert von 6,5 bis 7,5, vorzugsweise von 6,8 bis 7,2, beträgt.

6. Zusammensetzung nach einem der vorhergehenden Ansprüche, die eine Viskosität bei 10°C bei 64 s⁻¹ von niedriger als 1500 mPa.s, vorzugsweise niedriger als 1000 mPa.s, aufweist.

7. Zusammensetzung nach einem der vorhergehenden Ansprüche, die eine Gelfestigkeit von niedriger als 8000 g, vorzugsweise niedriger als 5000 g, aufweist.

8. Zusammensetzung nach einem der vorhergehenden Ansprüche, die höchstens 8,0 Gew.-% Zucker umfasst.

9. Zusammensetzung nach einem der vorhergehenden Ansprüche, die ferner einen Calcium-Komplexbildner umfasst.

10. Zusammensetzung nach einem der vorhergehenden Ansprüche, wobei der Calcium-Komplexbildner Phosphat, vorzugsweise Trinatriumphosphat, ist.

11. Zusammensetzung nach einem der vorhergehenden Ansprüche, wobei das Molkeprotein ein Molkeproteinisolat ist.

12. Produkt, das einen Behälter und die Zusammensetzung nach einem der Ansprüche 1 bis 12 in dem Behälter umfasst.

## Revendications

1. Composition aqueuse comprenant :
- de l'eau,
- au moins 8,0 % en poids de protéine de lactosérum,
- 0.1% à 1.0% de l'amidon natif non-pré-gélatinisé, et
- 5,0 % à 15,0 % en poids de sucre,
dans laquelle le pH va de 5,0 à 9,0.

2. Composition selon la revendication 1, dans laquelle l'amidon natif est de l'amidon natif de maïs cireux.

3. Composition selon l'une quelconque des revendications précédentes, dans laquelle l'amidon natif a une teneur en amylose de 0 % à 50 %, de préférence de 0 % à 30 %.

4. Composition selon l'une quelconque des revendications précédentes, dans laquelle la concentration en protéine de lactosérum est d'au moins 10,0 %, de préférence d'au moins 12,0 %.

5. Composition selon l'une quelconque des revendications précédentes, dans laquelle le pH va de 6,5 à 7,5, de préférence de 6,8 à 7,2.

6. Composition selon l'une quelconque des revendications précédentes, ayant une viscosité à 10°C à 64 s⁻¹ de moins de 1500 mPa.s, de préférence de moins de 1000 mPa.s.

7. Composition selon l'une quelconque des revendications précédentes, ayant une force de gel inférieure à 8000 g, de préférence inférieure à 5000 g.

8. Composition selon l'une quelconque des revendications précédentes, comprenant au maximum 8,0 % en poids de sucre.

9. Composition selon l'une quelconque des revendications précédentes, comprenant en outre un agent complexant le calcium.

10. Composition selon l'une quelconque des revendications précédentes, dans laquelle l'agent complexant le calcium est un phosphate, de préférence un phosphate trisodique.

11. Composition selon l'une quelconque des revendications précédentes, dans laquelle la protéine de lactosérum est un isolat de protéine de lactosérum.

12. Produit comprenant un récipient et la composition selon l'une quelconque des revendications 1 à 11, dans le récipient.
